(19) Europäisches Patentamt
European Patent Office
Office européen des brevets

(11) EP 1 162 226 A1

(12) EUROPEAN PATENT APPLICATION
published in accordance with Art. 158(3) EPC

(43) Date of publication:
12.12.2001 Bulletin 2001/50

(51) Int Cl.⁷: **C08J 3/12**, C08L 101/14

(21) Application number: 00900851.7

(86) International application number:
PCT/JP00/00271

(22) Date of filing: 21.01.2000

(87) International publication number:
WO 00/43441 (27.07.2000 Gazette 2000/30)

(84) Designated Contracting States:
AT BE CH CY DE DK ES FI FR GB GR IE IT LI LU MC NL PT SE

(30) Priority: 25.01.1999 JP 1600099

(71) Applicants:
• SUMITOMO SEIKA CHEMICALS CO., LTD.
Kako-gun, Hyogo 675-0145 (JP)
• UNI-CHARM CORPORATION
Kawanoe-shi Ehime 799-0111 (JP)

(72) Inventors:
• NAGATA, Manabu,
Sumitomo Seika Chemicals Co., Ltd
Shikama-ku, Himeji-shi, Hyogo 672 (JP)

• TAKEMORI, Shinichi,
Sumitomo Seika Chem. Co.,Ltd
Shikama-ku, Himeji-shi, Hyogo 672 (JP)
• UEYAMA, Hiroyuki,
Sumitomo Seika Chemicals Co. Ltd
Shikama-ku. Himeji-shi, Hyogo 672 (JP)
• OHNISHI, Kazuaki, Tech. Ctr,
Uni-Charm Corporation
Mitoyo-gun, Kagawa 769-1602 (JP)
• YABE, Youko, Tech. Ctr, Uni-Charm Corporation
Mitoyo-gun, Kagawa 769-1602 (JP)
• ISHIKAWA, Norihiko, Tech. Ctr, Uni-Charm Corp.
Mitoyo-gun, Kagawa 769-1602 (JP)

(74) Representative: HOFFMANN - EITLE
Patent- und Rechtsanwälte
Arabellastrasse 4
81925 München (DE)

(54) **HIGHLY WATER-ABSORBING RESIN PARTICLE**

(57) A high water-absorbent resin particle, prepared by adhering an ethylene-glycidyl (meth)acrylate copolymer to the surface of a resin particle made of a high water-absorbent resin in the ratio of 0.5 to 50 parts by weight of the ethylene-glycidyl (meth)acrylate copolymer based on 100 parts by weight of the resin particle. The high water-absorbent resin particle can be favorably used as hygienic materials such as paper diapers and sanitary napkins, agricultural and horticultural materials, and the like.

EP 1 162 226 A1

**Description**

TECHNICAL FIELD

The present invention relates to a high water-absorbent resin particle. More specifically, the present invention relates to a high water-absorbent resin particle which can be favorably used as hygienic materials such as paper diapers and sanitary napkins, agricultural and horticultural materials, and the like.

BACKGROUND ART

The high water-absorbent resin is a functional resin capable of absorbing and retaining water in an amount of several dozens to 1000 times or so of its weight. Because of the characteristics, it has been widely utilized in hygienic materials such as paper diapers and sanitary napkins, agricultural and horticultural materials, and the like.

Conventionally, the high water-absorbent resin has been usually used in the form of powder having very low adhesive strength. Therefore, the high water-absorbent resin has been used in the form of a water-absorbent material by forming a composite together with a fibrous substrate such as a nonwoven fabric, natural fibers such as pulp, or synthetic fibers when the high water-absorbent resin is applied to the above-mentioned uses. The water-absorbent material is designed to prevent migration and localization of the high water-absorbent resin in the water-absorbent material, and drop-off of the resin from the fibers by the intertwining of the high water-absorbent resin and the fibers.

However, in the recent years, although reductions in weight and thickness of the water-absorbent material are required in the field of hygienic materials, the conventional water-absorbent materials described above do not meet these requirements.

Therefore, in order to achieve reductions in weight and thickness of high water-absorbent materials, reduction of the amount of the fibrous substrate has been studied. However, when the amount of the fibrous substrate is reduced, it would be difficult to prevent migration and localization of the high water-absorbent resin in the water-absorbent material, and drop-off of the resin from the fibers only by the intertwining with the fibrous substrate.

As a means for solving these problems, there has been proposed a high water-absorbent resin composition prepared by forming a composite by fusing or fixing a thermoplastic resin on the surface of a high water-absorbent resin (Japanese Patent Laid-Open No. Hei 5-320523).

However, when the above-mentioned high water-absorbent resin composition is thermally fused to the fibrous substrate under practical heat-treatment conditions of 100° to 150°C or so, the adhesion of the high water-absorbent composition to the fibrous substrate after water absorption may be insufficient in some cases.

An object of the present invention is to provide a high water-absorbent resin particle excellent in adhesiveness to the fibrous substrate, which hardly drops off from a fibrous substrate even after the thermal fusion to the fibrous substrate such as a nonwoven fabric, pulp, synthetic fibers or paper, and the subsequent water absorption.

DISCLOSURE OF INVENTION

According to the present invention, there is provided a high water-absorbent resin particle, prepared by adhering an ethylene-glycidyl (meth)acrylate copolymer to the surface of a resin particle made of a high water-absorbent resin in the ratio of 0.5 to 50 parts by weight of the ethylene-glycidyl (meth)acrylate copolymer based on 100 parts by weight of the resin particle.

BEST MODE FOR CARRYING OUT THE INVENTION

The high water-absorbent resin particle of the present invention is prepared by adhering the above-mentioned ethylene-glycidyl (meth)acrylate copolymer to the surface of a resin particle made of a high water-absorbent resin.

Incidentally, the above-mentioned term "(meth)acrylate" means "acrylate" or "methacrylate."

The above-mentioned high water-absorbent resin is a crosslinked hydrophilic polymer having a water-absorbing capacity from several dozens to 1000 times or so of its weight, and has a hydrophilic group such as a carboxylic acid group, a carboxylate group, a carboxylic acid anhydride group, hydroxyl group or ethylene oxide group as a structural unit. The kind of the high water-absorbent resin is not limited to specified ones, and almost all of those for uses, including hygienic materials such as paper diapers and sanitary napkins, agricultural and horticultural materials, and the like can be usually used.

Concrete examples of the above-mentioned high water-absorbent resin include at least one member selected from the group consisting of a crosslinked acrylate polymer, a crosslinked vinyl alcohol-acrylate copolymer, a crosslinked maleic anhydride-grafted polyvinyl alcohol, a crosslinked acrylate-methacrylate copolymer, a crosslinked saponified methyl acrylate-vinyl acetate copolymer, a crosslinked starch-acrylate graft copolymer, a crosslinked saponified starch-acrylonitrile graft copolymer, a crosslinked carboxymethyl cellulose, a crosslinked isobutylene-maleic anhydride copolymer, and a crosslinked ethylene oxide polymer. These high water-absorbent resins can be used alone or in admixture of two or more kinds. Among them, the crosslinked acrylate polymer can be favorably used.

It is desired that the average particle diameter of the resin particle made of the above-mentioned high water-absorbent resin is not less than 5 μm, preferably not less than 20 μm, more preferably not less than 100 μm, from the viewpoint of easy handling. Also, it is desired that the average particle diameter of the resin particle made of the above-mentioned high water-absorbent resin is not more than 1000 μm, preferably not more than 800 μm, more preferably not more than 600 μm, from the viewpoints of homogeneously dispersing the high water-absorbent resin particle of the present invention over the fibrous substrate, thereby giving uniform water-absorbency.

One of the major characteristics in the present invention resides in that the ethylene-glycidyl (meth)acrylate copolymer is adhered to the surface of a resin particle made of a high water-absorbent resin.

As described above, in the case where the ethylene-glycidyl (meth)acrylate copolymer is adhered to the surface of the resin particle made of a high water-absorbent resin, there is exhibited an excellent effect such that the adhesion of the resulting high water-absorbent resin particle to the fibrous substrate becomes very firm. The reason why this excellent effect is exhibited has not yet been clear, but it is thought to be based upon the fact that when microscopically observed, glycidyl group of the ethylene-glycidyl (meth)acrylate copolymer and a hydrophilic group of the high water-absorbent resin are firmly bonded by covalent bond, hydrogen bond, van der Waals force, or the like, while ethylene group of the ethylene-glycidyl (meth)acrylate copolymer is firmly adhered to the fibrous substrate.

It is desired that the ethylene content in the ethylene-glycidyl (meth)acrylate copolymer is not less than 50% by weight, preferably not less than 60% by weight, more preferably not less than 70% by weight, from the viewpoint of the improvement of adhesiveness to the fibrous substrate. Also, it is desired that the ethylene content in the ethylene-glycidyl (meth)acrylate copolymer is not more than 99% by weight, preferably not more than 97% by weight, more preferably not more than 95% by weight, from the viewpoint of strengthening the bond between the fibrous substrate and the resin particle made of a high water-absorbent resin.

The kind of the ethylene-glycidyl (meth)acrylate copolymer is not limited to specified ones.

Concrete examples of the ethylene-glycidyl (meth)acrylate copolymer include, for instance, an ethylene-glycidyl acrylate copolymer, an ethyleneglycidyl methacrylate copolymer, an ethylene-glycidyl acrylate-glycidyl methacrylate copolymer, an ethylene-glycidyl acrylate-vinyl acetate copolymer, an ethylene-glycidyl acrylate-methyl acrylate copolymer, an ethylene-glycidyl acrylate-vinyl acetate-methyl acrylate copolymer, an ethylene-glycidyl acrylate-methyl methacrylate copolymer, an ethylene-glycidyl acrylate-vinyl acetate-methyl methacrylate copolymer, an ethylene-glycidyl acrylate-ethyl acrylate copolymer, an ethylene-glycidyl acrylate-vinyl acetate-ethyl acrylate copolymer, an ethylene-glycidyl methacrylate-vinyl acetate copolymer, an ethylene-glycidyl methacrylate-methyl acrylate copolymer, an ethylene-glycidyl methacrylate-vinyl acetate-methyl acrylate copolymer, an ethylene-glycidyl methacrylate-methyl methacrylate copolymer, an ethylene-glycidyl methacrylate-vinyl acetate-methyl methacrylate copolymer, an ethylene-glycidyl methacrylate-ethyl acrylate copolymer, an ethylene-glycidyl methacrylate-vinyl acetate-ethyl acrylate copolymer, an ethylene-glycidyl acrylate-glycidyl methacrylate-vinyl acetate copolymer, an ethylene-glycidyl acrylate-glycidyl methacrylate-methyl acrylate copolymer, and the like. These copolymers can be used alone or in admixture of two or more kinds. Among them, there can be favorably used at least one member selected from the group consisting of the ethylene-glycidyl acrylate copolymer, the ethylene-glycidyl methacrylate copolymer, the ethylene-glycidyl acrylate-vinyl acetate copolymer, the ethylene-glycidyl methacrylate-vinyl acetate copolymer, the ethylene-glycidyl acrylate-methyl acrylate copolymer and the ethylene-glycidyl methacrylate-methyl acrylate copolymer.

It is desired that the melting point of the ethylene-glycidyl (meth)acrylate copolymer is not lower than 50°C, preferably not lower than 60°C, as determined by a differential thermal analyzer, from the viewpoint of preventing the generation of blocking during storage or use of the high water-absorbent resin particle. Also, it is desired that the melting point of the ethylene-glycidyl (meth)acrylate copolymer is not higher than 150°C, preferably not higher than 130°C, more preferably not higher than 120°C, from the viewpoint of enabling the mixing of the high water-absorbent resin particle with the fibrous substrate at relatively low temperatures.

In addition, it is desired that the melt flow rate of the ethylene-glycidyl (meth)acrylate copolymer is not less than 1 g/10 minutes, preferably not less than 2 g/10 minutes at 190°C under 2160 gf, from the viewpoint of enabling the homogeneous mixing when the copolymer is mixed with the resin particle made of a high water-absorbent resin with heating, and is not more than 400 g/10 minutes, preferably not more than 300 g/10 minutes, more preferably not more than 100 g/10 minutes at 190°C under 2160 gf, from the viewpoint of the avoidance of the lowering of water-absorbency of the high water-absorbent resin particle due to the coat of the ethylene-glycidyl (meth)acrylate copolymer on the surface of the above-mentioned resin particle.

Incidentally, the ethylene-glycidyl (meth)acrylate copolymer can be used together with other thermoplastic resins within a range which would not hinder the object of the present invention.

The shape of the ethylene-glycidyl (meth)acrylate copolymer is not limited to specified ones. As the shape, there can be cited fine powder, powder, grain, granule, paste, pellet, lumpy mass, and the like.

It is desired that the amount of the ethylene-glycidyl (meth)acrylate copolymer is not less than 0.5 parts by weight, preferably not less than 3 parts by weight based on 100 parts by weight of the resin particle made of a high water-absorbent resin, from the viewpoint of giving the resulting high water-absorbent resin particle sufficient adhesiveness to the fibrous substrate, and is not more than 50 parts by weight, preferably not more than 30 parts by weight, based on 100 parts by weight of the resin particle made of a high water-absorbent resin, from the viewpoint of the avoidance of the lowering of water-absorbency of the high water-absorbent resin particle due to the coat of the ethylene-glycidyl (meth)acrylate copolymer on the surface of the above-mentioned resin particle.

As a process for preparing the high water-absorbent resin particle of the present invention, there can be cited, for instance, (A) a process comprising simply mixing a resin particle made of a high water-absorbent resin with an ethylene-glycidyl (meth)acrylate copolymer, thereby adhering the copolymer to the surface of the high water-absorbent resin; (B) a process comprising mixing a resin particle made of a high water-absorbent resin with an ethylene-glycidyl (meth)acrylate copolymer, heating the resulting mixture after mixing or at the same time of mixing at a temperature of not lower than the melting point of the ethylene-glycidyl (meth)acrylate copolymer, to melt the ethylene-glycidyl (meth) acrylate copolymer, and fusing the molten copolymer to the surface of the resin particle made of a high water-absorbent resin; (C) a process comprising dissolving an ethylene-glycidyl (meth)acrylate copolymer in a suitable solvent, mixing the solution with a resin particle made of a high water-absorbent resin, stirring the resulting mixture, and thereafter distilling away the solvent with heating, thereby adhering the ethylene-glycidyl (meth)acrylate copolymer onto the surface of the resin particle; and the like.

The device for mixing a resin particle made of a high water-absorbent resin with the ethylene-glycidyl (meth) acrylate copolymer with heating is not limited to specified ones, as long as it is a heatable mixer. Its concrete examples include, for instance, a kneader, an extruder, Nauta Mixer, Henschel Mixer, Banbury Mixer and the like.

The high water-absorbent resin particle of the present invention thus obtained can be applied to various fibrous substrates.

The fibrous substrates include, for instance, woven fabrics, nonwoven fabrics, natural fibers such as pulps, synthetic fibers, paper, foamed resin sheets such as soft polyurethane foams, but the present invention is not limited only to those exemplified ones.

The method for applying the high water-absorbent resin particle of the present invention to a fibrous substrate includes, for instance, a method comprising dispersing a high water-absorbent resin particle in a fibrous substrate such as a nonwoven fabric cloth, pulp or paper; a method comprising interposing a layer of a high water-absorbent resin particle between a plurality of fibrous substrates, and subjecting the resulting laminate to heat treatment at a temperature of 50° to 170°C or so; and the like. According to these methods, the ethylene-glycidyl (meth)acrylate copolymer adhered to the surface of high water-absorbent resin particle is melted by heating, so that the high water-absorbent resin particle can be tightly bonded to the fibrous substrate. Therefore, the fibrous substrate, to which the high water-absorbent resin particle is adhered, exhibits an excellent effect such that the drop-off of the water-absorbent gel formed by the water absorption of the high water-absorbent resin particle from the fibrous substrate can be avoided.

Next, the present invention will be specifically described on the basis of the following examples, without intending to limit the present invention only to these examples.

Example 1

A bench-type kneader (manufactured by Irie Shokai, Type: PBV-03) heated to 150°C was charged with 100 parts by weight of resin particles made of a high water-absorbent resin (manufactured by Sumitomo Seika Chemicals Co., Ltd. under the trade name of AQUA KEEP UG-310P, crosslinked acrylate polymer, average particle diameter: 400 μm). Next, 10 parts by weight of an ethylene-glycidyl acrylate-vinyl acetate copolymer (manufactured by Sumitomo Chemical Co., Ltd. under the trade name of BOND FAST 7B, melting point: 95°C, melt flow rate: 7 g/10 minutes, ethylene content: 83% by weight, glycidyl methacrylate content: 12% by weight, vinyl acetate content: 5% by weight) was added to the above bench-type kneader with stirring, and the mixture was blended with stirring for 10 minutes. Thereafter, the resulting mixture was cooled to room temperature with stirring, to give high water-absorbent resin particles.

Example 2

The same procedures as in Example 1 were carried out except that the amount of the ethylene-glycidyl acrylate-vinyl acetate copolymer used in Example 1 was changed to 20 parts by weight, to give high water-absorbent resin particles.

Example 3

The same procedures as in Example 1 were carried out except that the amount of the ethylene-glycidyl acrylate-vinyl acetate copolymer used in Example 1 was changed to 30 parts by weight, to give high water-absorbent resin particles.

Example 4

The same procedures as in Example 2 were carried out except that 20 parts by weight of an ethylene-glycidyl methacrylate copolymer (manufactured by Sumitomo Chemical Co., Ltd. under the trade name of BOND FAST E, melting point: 103°C, melt flow rate: 3 g/10 minutes, ethylene content: 88% by weight, glycidyl methacrylate content: 12% by weight) was used in place of 20 parts by weight of the ethylene-glycidyl acrylate-vinyl acetate copolymer used in Example 2, to give high water-absorbent resin particles.

Comparative Example 1

The same procedures as in Example 2 were carried out except that 20 parts by weight of a low-density polyethylene (manufactured by Sumitomo Seika Chemicals Co., Ltd. under the trade name of FLOTHENE A1003N, melting point 110°C, melt flow rate: 75 g/10 minutes) was used in place of 20 parts by weight of the ethylene-glycidyl acrylate-vinyl acetate copolymer used in Example 2, to give high water-absorbent resin particles.

Comparative Example 2

The same procedures as in Example 2 were carried out except that 20 parts by weight of an ethylene-acrylic acid copolymer (manufactured by Dow Chemical Japan Limited under the trade name of PRIMACOR 5980, melting point 80°C, melt flow rate: 300 g/10 minutes, ethylene content: 80% by weight, acrylic acid content: 20% by weight) was used in place of 20 parts by weight of the ethylene-glycidyl acrylate-vinyl acetate copolymer used in Example 2, to give high water-absorbent resin particles.

Comparative Example 3

The same procedures as in Example 1 were carried out except that the ethylene-glycidyl acrylate-vinyl acetate copolymer used in Example 1 was not used, to give high water-absorbent resin particles.

Comparative Example 4

The same procedures as in Example 1 were carried out except that the amount of the ethylene-glycidyl acrylate-vinyl acetate copolymer used in Example 1 was changed to 60 parts by weight, to give high water-absorbent resin particles.

Next, as the physical properties of the high water-absorbent resin particles obtained in Examples 1 to 4 and Comparative Examples 1 to 4, adhesiveness, water-absorption rate, and amount of water absorbed were determined in accordance with the following methods. The results are shown in Table 1.

(1) Adhesiveness

A. Adhesiveness (Drop-off Ratio) Before Water Absorption

On a dry-type nonwoven fabric made of polyolefin fibers (10 cm × 10 cm × 0.2 cm) were uniformly dispersed 0.5 g of the high water-absorbent resin particles, and subjected to a heat treatment in a hot air drier at 130°C for 7 minutes, to give a nonwoven fabric sample. Thereafter, this nonwoven fabric sample was cooled to room temperature. High water-absorbent resin particles which were not fused to the sample were shaken off from the sample. The high water-absorbent resin shaken off was weighed.

The adhesiveness (drop-off ratio) before water absorption was obtained from the equation:

[Drop-off Ratio (%) Before Water Absorption]

= [Weight (g) of High Water-Absorbent Resin Shaken Off]

÷ [Amount of High Water-Absorbent Resin Particles Used (0.5 g)] × 100.

B. Adhesiveness (Drop-off Ratio) After Water Absorption

A 500-ml beaker was charged with 300 ml of 0.9% saline. The nonwoven fabric sample obtained after the determination of the adhesiveness (drop-off ratio) in the above section "A. Adhesiveness (Drop-off Ratio) Before Water Absorption" was cut into a piece of 5 cm × 5 cm. The nonwoven fabric sample piece was dipped in the saline, with the face of the dispersed high water-absorbent resin particles being faced down.

After the dipping for 10 minutes, the nonwoven fabric sample piece was further dipped for 2 minutes with stirring at 600 rpm using a stirrer.

Next, the nonwoven fabric sample was taken out from saline, and excess water was removed by suction filtration. Thereafter, the weight of the nonwoven fabric sample after water absorption (Weight A) was determined. Further, excess saline was removed from the gel remaining in the beaker by suction filtration, and thereafter the weight of the residual gel (Weight B of Gel) was determined.

Only a nonwoven fabric not having fused high water-absorbent resin particles was dipped in 0.9% saline, and excess saline was removed by suction filtration in the same manner as the above. Thereafter, the nonwoven fabric (Weight C) was weighed.

The adhesiveness (drop-off ratio) after water absorption was obtained from the equation:

[Drop-off Ratio (%) After Water Absorption]

= [Weight B of Gel]

÷ [Weight A + Weight B of Gel - Weight C] × 100.

(2) Water-Absorption Rate

A 100-ml beaker was charged with 50 ml of 0.9% saline, and 2 g of the high water-absorbent resin particles were added thereto with stirring at 600 rpm using a stirrer. The time point of addition was defined as a starting point, and the time point at which the swirling due to stirring disappeared was defined as a termination point. The water-absorption rate was defined as a time period required from the starting point to the finishing point.

(3) Amount of Water Absorbed

Two grams of the high water-absorbent resin particles were added to 500 ml of 0.9% saline and immersed therein for 1 hour with stirring using a stirrer. Thereafter, the liquid mixture was transferred to a 200-mesh sieve to drain water for 30 minutes. The weight of the high water-absorbent resin particles after water absorption was determined.

The amount of water absorbed was obtained from the equation:

[Amount of Water Absorbed]

= [Weight (g) After Water Absorption]

÷ [Amount of Original High Water-Absorbent Resin Particles Used (2 g)] × 100.

Table 1

| Properties of High Water-Absorbent Resin Particles | | | | |
|---|---|---|---|---|
| Ex. Nos. | Drop-off Ratio (%) | | Water-Absorption Rate (seconds) | Amount of Water Absorbed (g/g) |
| | Before Water Absorption | After Water Absorption | | |
| 1 | 0 | 51 | 5 | 52 |

Table 1 (continued)

| Properties of High Water-Absorbent Resin Particles | | | | |
|---|---|---|---|---|
| Ex. Nos. | Drop-off Ratio (%) | | Water-Absorption Rate (seconds) | Amount of Water Absorbed (g/g) |
| | Before Water Absorption | After Water Absorption | | |
| 2 | 0 | 23 | 22 | 34 |
| 3 | 0 | 6 | 45 | 26 |
| 4 | 0 | 24 | 24 | 28 |
| Comp. Ex. Nos. | | | | |
| 1 | 15 | 78 | 24 | 26 |
| 2 | 13 | 74 | 43 | 23 |
| 3 | 100 | 0 | 4 | 60 |
| 4 | 0 | 0 | >3600 | 5 |

It can be seen from the results shown in Table 1 that the high water-absorbent resin particles obtained in Examples 1 to 4 are hardly dropped off from a fibrous substrate even after subjected to thermal fusion onto the fibrous substrate such as a nonwoven fabric and water absorption. Therefore, the resin particles are excellent in adhesiveness to the fibrous substrate.

INDUSTRIAL APPLICABILITY

The high water-absorbent resin particle of the present invention exhibits excellent effects that the high water-absorbent resin particle is stably maintained even after water absorption, since the high water-absorbent resin particle is firmly adhered onto a fibrous substrate only by heat-fusion. Therefore, the high water-absorbent resin particle of the present invention exhibits effects of the prevention of migration and localization of the high water-absorbent resin particle in the water-absorbent material or drop-off of the high water-absorbent resin particle from fibers in the case where the amount of the fibrous substrate is reduced.

Accordingly, the high water-absorbent resin particle of the present invention can be suitably used in various applications, including hygienic materials, such as paper diapers and sanitary napkins, and water-absorbent materials for other industrial materials such as agricultural and horticultural materials.

**Claims**

1.   A high water-absorbent resin particle, prepared by adhering an ethylene-glycidyl (meth)acrylate copolymer to the surface of a resin particle made of a high water-absorbent resin in the ratio of 0.5 to 50 parts by weight of the ethylene-glycidyl (meth)acrylate copolymer based on 100 parts by weight of the resin particle.

2.   The high water-absorbent resin particle according to claim 1, wherein the ethylene-glycidyl (meth)acrylate copolymer is at least one member selected from the group consisting of an ethylene-glycidyl acrylate copolymer, an ethylene-glycidyl methacrylate copolymer, an ethylene-glycidyl acrylate-vinyl acetate copolymer, an ethylene-glycidyl methacrylate-vinyl acetate copolymer, an ethylene-glycidyl acrylate-methyl acrylate copolymer, and an ethylene-glycidyl methacrylate-methyl acrylate copolymer.

3.   The high water-absorbent resin particle according to claim 1 or 2, wherein the content of ethylene in the ethylene-glycidyl (meth)acrylate copolymer is 50 to 99% by weight.

4.   The high water-absorbent resin particle according to any one of claims 1 to 3, wherein the melting point of the ethylene-glycidyl (meth)acrylate copolymer is 50° to 150°C.

5.   The high water-absorbent resin particle according to any one of claims 1 to 4, wherein the melt flow rate of the ethylene-glycidyl (meth)acrylate copolymer is 1 to 400 g/10 minutes at 190°C under 2160 gf.

**6.** The high water-absorbent resin particle according to any one of claims 1 to 5, wherein the high water-absorbent resin is at least one member selected from the group consisting of a crosslinked acrylate polymer, a crosslinked vinyl alcohol-acrylate copolymer, a crosslinked maleic anhydride-grafted polyvinyl alcohol, crosslinked acrylate-methacrylate copolymer, a crosslinked saponified methyl acrylate-vinyl acetate copolymer, a crosslinked starch-acrylate graft copolymer, a crosslinked saponified starch-acrylonitrile graft copolymer, a crosslinked carboxymethyl cellulose, a crosslinked isobutylene-maleic anhydride copolymer, and a crosslinked ethylene oxide polymer.

**7.** The high water-absorbent resin particle according to any one of claims 1 to 6, wherein the resin particle has an average particle diameter of 5 to 1000 μm.

## INTERNATIONAL SEARCH REPORT

| | International application No. |
|---|---|
| | PCT/JP00/00271 |

A. CLASSIFICATION OF SUBJECT MATTER
    Int.Cl⁷   C08J3/12, C08L101/14

According to International Patent Classification (IPC) or to both national classification and IPC

B. FIELDS SEARCHED

Minimum documentation searched (classification system followed by classification symbols)
    Int.Cl⁷   C08J3/00-28, C08L1/00-101/16

Documentation searched other than minimum documentation to the extent that such documents are included in the fields searched
    Jitsuyo Shinan Koho          1926-1996    Toroku Jitsuyo Shinan Koho  1994-2000
    Kokai Jitsuyo Shinan Koho    1971-2000    Jitsuyo Shinan Toroku Koho  1996-2000

Electronic data base consulted during the international search (name of data base and, where practicable, search terms used)
    WPI/L

C. DOCUMENTS CONSIDERED TO BE RELEVANT

| Category* | Citation of document, with indication, where appropriate, of the relevant passages | Relevant to claim No. |
|---|---|---|
| A | US, 4758617, A (ARAKAWA KAGAKU KOGYO KK), 19 July, 1988 (19.07.88), Claims & JP, 61-293228, A | 1-7 |
| A | JP, 7-179613, A (Kao Corporation), 18 July, 1995 (18.07.95), Claims (Family: none) | 1-7 |
| A | JP, 6-16817, A (Sekisui Plastics Co., Ltd.), 25 January, 1994 (25.01.94), Claims (Family: none) | 1-7 |
| A | JP, 5-507511, A (The Dow Chemical Company), 28 October, 1993 (28.10.93), Claims & WO, 91/18042, A  & AU, 9178630, A & EP, 530231, A | 1-7 |
| A | JP, 56-159232, A (KURARAY CO., LTD.), 08 December, 1981 (08.12.81), Claims (Family: none) | 1-7 |

☐ Further documents are listed in the continuation of Box C.    ☐ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier document but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 07 February, 2000 (07.02.00) | 15 February, 2000 (15.02.00) |

| Name and mailing address of the ISA/ | Authorized officer |
|---|---|
| Japanese Patent Office | |
| Facsimile No. | Telephone No. |

Form PCT/ISA/210 (second sheet) (July 1992)